# EUROPÄISCHE PATENTSCHRIFT

(11) **EP 3 844 936 B1**
(45) Veröffentlichungstag und Bekanntmachung des Hinweises auf die Patenterteilung: **10.08.2022**
(21) Anmeldenummer: 19736619.8
(22) Anmeldetag: 26.06.2019
(51) Int. Cl.: H04L 67/12, H04L 67/52, H04L 67/50, H04L 67/568, H04L 67/60

(54) **ANFORDERN, ANALYSIEREN UND ÜBERMITTELN VON DATEN DER FAHRERASSISTENZSYSTEME EINES FAHRZEUGS AN EINEN EXTERNEN NUTZER**
REQUESTING, ANALYSING AND TRANSMITTING DATA FROM DRIVER ASSISTANCE SYSTEMS ON A VEHICLE TO AN EXTERNAL USER
DEMANDER, ANALYSER ET TRANSMETTRE LES DONNÉES DES SYSTÈMES D'AIDE À LA CONDUITE D'UN VÉHICULE À UN UTILISATEUR EXTERNE

(30) Priorität: 27.08.2018 DE 102018214452
(43) Veröffentlichungstag der Anmeldung: 07.07.2021
(73) Patentinhaber: VOLKSWAGEN AKTIENGESELLSCHAFT, 38440 Wolfsburg (DE)
(72) Erfinder: MAX, Stephan, 38518 Gifhorn (DE); KOCH, Roman, 38100 Braunschweig (DE)
(86) Internationale Anmeldenummer: PCT/EP2019/066977
(87) Internationale Veröffentlichungsnummer: WO 2020/043348

(56) Entgegenhaltungen:
- DE-A1-102016 225 287
- US-A1- 2015 112 730

## Beschreibung

Die Erfindung betrifft ein Verfahren zum Anfordern, Analysieren und Übermitteln von Daten der Fahrerassistenzsysteme eines Fahrzeugs an einen externen Nutzer sowie eine entsprechende Vorrichtung.

In den vergangenen Jahren sind vielfältige interaktive elektrische Seriensysteme zur Unterstützung des Fahrers entwickelt worden. Die integrierten Assistenz- und Komfortsysteme erfassen mit diversen Sensoren das Umfeld des Fahrzeugs, um die Fahrt sicherer und komfortabler zu gestalten, und erzeugen auf diese Weise aktuelle Daten über das gerade befahrene Umfeld.

Da die Fahrzeuge bereits mit diversen Sensorsystemen ausgestattet sind, ist es sinnvoll diese Daten zu sammeln und übergreifend zu nutzen. Verstärkt wird dieser Trend durch zwei veränderte Rahmenbedingungen. Zum einen sind bisher optional angebotene Systeme durch die stetig steigenden Sicherheitsanforderungen von beispielsweise NCAP zur Serienausstattung geworden. Zum anderen ist durch den Zwang zum elektronischen Notrufsystem, auch eCall genannt, eine Mobilfunkanbindung im Fahrzeug gesetzlich vorgeschrieben. Daher können die Umfelddaten direkt ortsbezogen und zeitsynchronisiert erhoben und kommuniziert werden.

Im Fahrzeug selbst werden unterschiedliche Datenklassen erfasst. Hinsichtlich "Umfeld" werden die Daten wie folgt unterteilt:
- Geoinformationen, welche die geographischen Phänomene betreffen, die direkt und indirekt mit einer auf die Erde bezogene Position verbunden sind,
- Verkehrsdaten, also eine Beschreibung der Zustände aller am Verkehr beteiligten Objekte,
- Ortsbezogene Ereignisdaten, wie beispielsweise punktuell auftretende lokale Gefahrenstellen, und
- Ortsbezogene Zustandsdaten, nämlich kontinuierlich erfassbare Daten wie beispielsweise Temperatur, Parkplatzbelegung, Ampelzustand, Wechselverkehrszeichen, etc.

Detaillierter werden als Geoinformationen alle Umfelddaten bezeichnet, welche geographische Phänomene beschreiben, die direkt und indirekt mit einer auf die Erde bezogene Position verbunden sind. Diese Daten werden hauptsächlich von bildgebenden Sensoren wie der Frontkamera oder den Umfeldkameras eines Kraftfahrzeugs erfasst und zur Verfügung gestellt.

Unter Verkehrsdaten werden gemäß der obigen Zusammenstellung alle Daten verstanden, welche die Bewegungen von Verkehrsteilnehmern beschreiben. Traditionell sind hier die "Floating Car Data, kurz FCD" zu nennen, welche die Bewegung des eigenen Fahrzeugs auf Basis von GPS-Messungen beschreiben. Erweitert werden die Daten durch Informationen aus Front- und Heckradaren bzw. der Frontkamera. Hierdurch können die Bewegungsdaten anderer Verkehrsteilnehmer klassifiziert und vermessen und als Datensatz bereitgestellt werden.

Zu den ortsbezogenen Ereignisdaten gehören alle Daten, welche Ereignissen zuzuordnen sind, die spontan auf der Straße entstehen können und nach einer endlichen Zeit wieder verschwinden. Unterteilt werden können die Daten in Ereignisse, die das Fahrzeug selbst betreffen und in Daten welche Ereignisse im Umfeld beschreiben. Beispiele für derartige Daten, welche das Fahrzeug selbst betreffen können, sind Unfall, Panne, Sichtbehinderung, Traktionsverlust oder mittels der Umfeldsensorik erkannte Baustellen, Ein- und Ausfahrten, Schlaglöcher, Personen auf der Fahrbahn usw..

Unter den Begriff der ortsbezogenen Zustandsdaten fallen alle Zustände, welche kontinuierlich erfasst werden können. Hierzu gehören die Wetterdaten des Klimasteuergeräts und des Regen / Licht-Sensors mit:
- Temperatur,
- Feinstaub,
- Luftqualität,
- Luftfeuchte,
- Regenmenge,
- Schwall erkannt,
- Helligkeit (Infrarot, normaler Sichtbereich), und
- Gischt.

Weiter fallen Parkplatzdaten unter ortsbezogenen Zustandsdaten. Hier wird durch die Ultraschallsensoren eine beidseitige Kontur bereitgestellt, wodurch sich Parkplätze, seitliche Objekte, Bordsteine, Freibereiche, etc. erkennen lassen.

Mit den so ermittelten Daten können beispielsweise hochgenaue Karten erzeugt werden, die für das automatische Fahren notwendig sind. Ferner können ortsbezogene Zustandsdaten zur verbesserten Prognose von Wetterzuständen eingesetzt werden oder Warnungen und Empfehlungen an andere Verkehrsteilnehmer erzeugt werden.

Die Druckschrift US 2017/0155696 A1 betrifft ein Vorverarbeitungs-System zum mehrstufigen parallelen Puffern und kontextbasiertem Übertragen von Daten mit einer ersten datenverarbeitenden Ebene und einer zweiten datenverarbeitenden Ebene. Die erste datenverarbeitende Ebene umfasst einen Puffer der ersten Ebene zum Puffern von Daten einer Vielzahl von Rohdaten-Strömen einer Vielzahl von Fahrzeugen. Die zweite datenverarbeitende Ebene umfasst ein elektronisches Task-Warteschlangenverzeichnis (Task-Queuing Directory, kurz TQD-Modul) und eine Vielzahl von datenverarbeitenden Puffern der zweiten Ebene. Das TQD-Modul erzeugt eine Vielzahl von Tasks als Antwort auf den Eingang von seriellen Datenströmen des Puffers der ersten Ebene. Das TQD-Modul weist ferner jedem Task einen korrespondierenden Puffer der zweiten Ebene zu und trennt die seriellen Datenströme in individuelle Datenströme, die einem Puffer der zweiten Ebene als Funktion des Tasks zugeführt werden, um so einen mehrstufigen parallelen kontextbasierten Pufferbetrieb zu erzeugen.

Die Druckschrift US 2014/0330926 A1 betrifft ein Verfahren, mit welchem Echtzeitdaten, die von einem oder mehreren Echtzeitanalyse-Diensten bearbeitet werden sollen, vorverarbeitet werden. Dabei umfasst das Verfahren die folgenden Schritte:
- Empfangen von Daten einer oder mehrerer Client-Einrichtungen in einem statusfreien Eingangsknoten,
- Transformieren der Daten in Echtzeit im statusfreien Eingangsknoten,
- Ermitteln eines Echtzeitanalyse-Dienstes für die transformierten Daten im statusfreien Eingangsknoten in Echtzeit, und
- Weiterleiten der transformierten Daten in Echtzeit an den ermittelten Echtzeitanalyse-Dienst zum statusbehafteten Verarbeiten.

Die Druckschrift DE 10 2016 225 287 A1 betrifft ein Verfahren, eine Vorrichtung und ein computerlesbares Speichermedium mit Instruktionen zur Verarbeitung von durch ein Kraftfahrzeug erfassten Daten. In einem ersten Schritt wird ein von einem Kraftfahrzeug erfasstes Datum empfangen. Anschließend wird eine örtliche oder zeitliche Verschleierung auf das empfangene Datum angewendet. Alternativ oder zusätzlich wird das empfangene Datum von anderen vom Kraftfahrzeug erfassten Daten getrennt. Das verschleierte oder abgetrennte Datum wird schließlich zur Auswertung weitergegeben. Die örtliche oder zeitliche Verschleierung oder das Trennen des empfangenen Datums von anderen vom Kraftfahrzeug erfassten Daten kann dabei innerhalb des Kraftfahrzeugs oder in einem mit dem Kraftfahrzeug in Verbindung stehenden Empfangssystem erfolgen.

Die Druckschrift US 2015/0112730 A1 betrifft ein Verfahren zum Sammeln und Beurteilen von Umfelddaten der Sensoren eines Fahrzeugs zum Erstellen einer Risikoanalyse. Dabei umfasst das Verfahren den Empfang erster Sensordaten, die Informationen darstellen, die während eines ersten Zeitraums von einem Sensor gesammelt wurden, der sich auf oder in einem Fahrzeug befindet, das für die Erfassung einer Umgebung außerhalb des Fahrzeugs konfiguriert ist, das Speichern der Daten in einem Speicher, das Verarbeiten der Daten zur Bestimmung eines ersten Satzes eines oder mehrerer Merkmale der externen Umgebung und die Bestimmung eines ersten Risikoindikators, der ein Verlustrisiko während des ersten Zeitraums darstellt. Das Verfahren umfasst auch den Empfang von zweiten Sensordaten, die Informationen darstellen, die während eines zweiten Zeitraums vom Sensor gesammelt wurden, das Speichern der Daten im Speicher und das Verarbeiten der Daten, um einen zweiten Satz eines oder mehrerer Merkmale der externen Umgebung zu bestimmen. Das Verfahren umfasst auch die Bestimmung eines zweiten Risikoindikators, der auf der Grundlage des zweiten Merkmalssatzes ein Verlustrisiko während des zweiten Zeitraums darstellt.

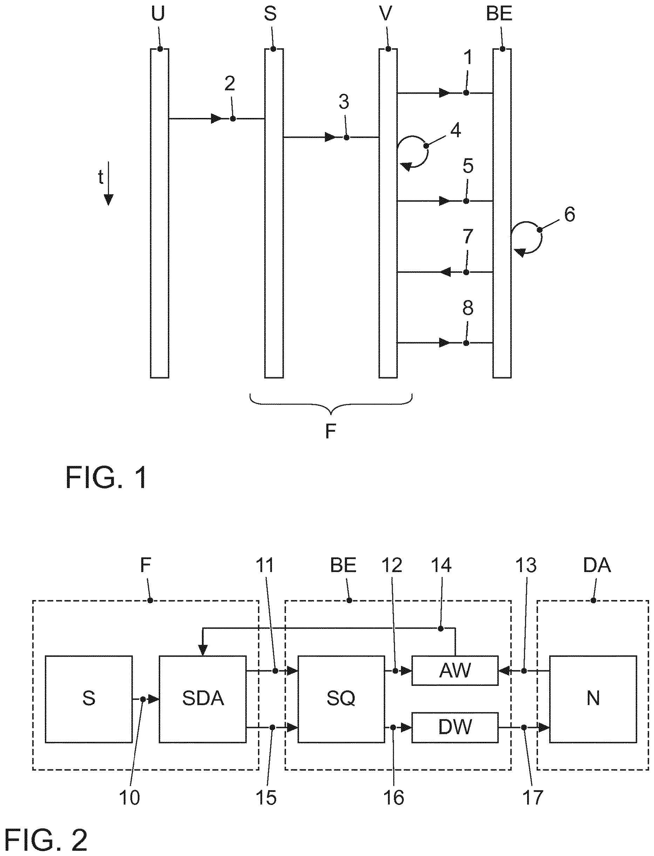

Die Übermittlung von Daten über das Umfeld eines Fahrzeugs an einen externen Backend-Rechner BE nach dem sogenannten Pull-Prinzip, wie dies derzeit gehandhabt wird und nachfolgend unter Bezug zu Fig. 1 beschrieben wird, hat gravierende Nachteile. So entsteht auf der Seite des Backend-Rechnersein ein hohes Abfragevolumen und die Daten müssen im Fahrzeug lange gespeichert werden. Ferner müssen jegliche übertragenen Daten anonymisiert werden, was entweder zu einer deutlich höheren Latenz des Durchlaufs oder zu möglichen ungewollten Datenanforderungen bei ungewollten Anfragen durch die verschleierte Position führen kann.

Der Erfindung liegt daher die Aufgabe zugrunde, ein effizienteres Verfahren zur Übermittlung von Daten der Fahrerassistenzsysteme, kurz FAS-Daten, an einen externen Backend-Rechner zur Analyse der aus den FAS-Daten gebildeten Schwarmdaten sowie eine entsprechende Vorrichtung zu schaffen.

Diese Aufgabe wird durch ein Verfahren mit den Merkmalen des Anspruch 1 sowie durch eine Vorrichtung mit den Merkmalen des Anspruchs 9 gelöst. Bevorzugte Ausgestaltungen der Erfindung sind Gegenstand der Unteransprüche.

Das erfindungsgemäße Verfahren zum Anfordern, Analysieren und Übermitteln von Daten der Fahrerassistenzsysteme eines Fahrzeugs, im Folgenden durchgehend als FAS-Daten bezeichnet, an einen externen Nutzer umfasst die Schritte:
- Ermitteln von FAS-Daten durch die Sensorik der Fahrerassistenzsysteme des Fahrzeugs,
- Speichern der FAS-Daten in einem fahrzeugseitigen Schwarmdatenaggregator, wobei die FAS-Daten im Schwarmdatenaggregator mit einer Zerfallszeit versehen sind,
- Erstellen einer Zusammenfassung der im Schwarmdatenaggregator gespeicherten FAS-Daten,
- Übermitteln der Zusammenfassung der FAS-Daten an einen Schwarm-Speicher eines externen Backend-Rechners,
- Analysieren der Zusammenfassung der FAS-Daten durch eine Analyseeinrichtung des Backend-Rechners,
- Anfordern der im Schwarmdatenaggregator gespeicherten FAS-Daten durch die Analyseeinrichtung, falls die Analyse der Zusammenfassung ergibt, das relevante FAS-Daten im Schwarmdatenaggregator vorliegen,
- Übertragen der FAS-Daten aus dem Schwarmdatenaggregator des Fahrzeugs an den Schwarm-Speicher des Backend-Rechners aufgrund der Anforderung, und
- Übertragen der FAS-Daten aus dem Schwarm-Speicher an den externen Nutzer zur weiteren Verwendung.

Auf diese Weise ergibt sich ein geringeres Datentransfervolumen als bei dem bekannten Verfahren nach dem Pull-Prinzip, da nur dann FAS-Daten übertragen werden, wenn sie tatsächlich benötigt werden. Ferner wird eine schnelle Reaktionszeit erreicht werden, da die Auslösung der Datenanforderung bei positiver Analyse der Zusammenfassung durch die Analyseeinrichtung erfolgt.

Vorzugsweise werden die im Schwarm-Speicher gespeicherten FAS-Daten mittels einer Übermittlungs- und Anonymisierungseinrichtung anonymisiert und in anonymisierter Form an den externen Nutzer weitergeleitet. Dabei kann die von der Übermittlungs- und Anonymisierungseinrichtung vorgenommene Anonymisierung der an den Nutzer übertragenen FAS-Daten durch eine zeitliche und/oder räumliche Verrauschung erfolgen. Insbesondere kann die zur Anonymisierung angewandte Art der Verrauschung eine Funktion der FAS-Daten sein.

Ist es beispielsweise, wie bei Wetterdaten oder Straßenzustandsdaten bedingt durch Schnee, Eis oder Nässe, wichtig, den Zeitpunkt der Erzeugung der FAS-Daten zu kennen, so kann die Anonymisierung durch eine räumliche Ungenauigkeit, d.h. eine räumliche Verrauschung, erfolgen. Kommt es aber auf den Zeitpunkt der Erfassung der FAS-Daten nicht an, sondern auf die genaue Position, so kann eine zeitliche Verschleierung erfolgen. Andere Verfahren der Verschleierung des Personenbezugs der FAS-Daten sind möglich.

Weiter bevorzugt basiert die von der Analyseeinrichtung vorgenommen Analyse der Zusammenfassung der im Schwarmdatenaggregator temporär gespeicherten FAS-Daten auf einem parametrierbaren Analysealgorithmus. Dabei werden vorzugsweise die Parameter für den Analysealgorithmus vom Nutzer bereitgestellt und an die Analyseeinrichtung zur Anwendung in dem Analysealgorithmus übertragen. Auf diese Weise kann der Analysealgorithmus flexibel gestaltet werden.

Vorzugsweise sind die vom Nutzer für den Analysealgorithmus bereitgestellten Parameter eine Funktion der vom Nutzer vorgesehenen Datenanalyse der FAS-Daten. Mit anderen Worten, der Nutzer legt fest, welche FAS-Daten für seine Auswertung und Analyse benötigt werden. Dabei können die Parameter beispielsweise eine räumliche oder/oder zeitliche oder sonstige Auswahl bezüglich der FAS-Daten sein.

Weiter bevorzugt werden die Parameter in einem vorgegebenen zeitlichen Zyklus vom Nutzer an die Analyseeinrichtung übertragen. Der Zyklus kann dabei beispielsweise stündlich, täglich oder wöchentlich sein.

Die erfindungsgemäße Vorrichtung zum Anfordern, Analysieren und Übermitteln von Daten der Fahrerassistenzsysteme eines Fahrzeugs, sogenannte FAS-Daten, an einen externen Nutzer, wobei die Vorrichtung zur Durchführung des im Vorangegangenen erläuterten Verfahrens eingerichtet und ausgelegt ist, umfasst:
- eine fahrzeugseitige Sensorik der Fahrerassistenzsysteme zur Generierung von FAS-Daten,
- einen fahrzeugseitigen Schwarmdatenaggregator zur temporären Speicherung der erfassten FAS-Daten,
- einen externen Backend-Rechner mit einem Schwarm-Speicher zur Speicherung der fahrzeugseitig erzeugten FAS-Daten,
- einem Nutzer, der eine Datenanalyse ausgewählter FAS-Daten durchführt, und
- eine im Backend-Rechner angeordnete Analyseeinrichtung mit einem Analysealgorithmus, wobei
   - der Schwarmdatenaggregator aus den temporär gespeicherten FAS-Daten eine Zusammenfassung erstellt,
   - die Zusammenfassung des Schwarmdatenaggregators an den Schwarm-Speicher des externen Backend-Rechners übertragen wird und die Zusammenfassung von der Analyseeinrichtung anhand des Analysealgorithmus analysiert wird,
   - die im Schwarmdatenaggregator gespeicherten FAS-Daten durch die Analyseeinrichtung angefordert werden, falls die Analyse der Zusammenfassung ergibt, das relevante FAS-Daten im Schwarmdatenaggregator vorliegen,
   - die FAS-Daten aus dem Schwarmdatenaggregator des Fahrzeugs an den Schwarm-Speicher des Backend-Rechners aufgrund der Anforderung übertragen werden, und
   - die FAS-Daten aus dem Schwarm-Speicher an den externen Nutzer übertragen werden.

Vorzugsweise ist im Backend-Rechner eine Übermittlungs- und Anonymisierungseinrichtung angeordnet, welche die auf Anforderung der Analyseeinrichtung in den Schwarm-Speicher übertragenen FAS-Daten anonymisiert und die anonymisierten Daten an den Nutzer überträgt.

Weiter bevorzugt wird der fahrzeugseitige Schwarmdatenaggregator durch einen Ringspeicher gebildet, so dass die Daten nach einer vorgegebenen Zeit gelöscht werden.

Eine konventionelle Datenübermittlung gemäß dem Pull-Prinzip sowie eine bevorzugte Ausführungsform der Erfindung werden nachfolgend anhand der Zeichnungen erläutert. Dabei zeigt
- Fig. 1: die Übermittlung von Daten eines Fahrzeugs an einen externen Nutzer nach dem Pull-Prinzip (Stand der Technik), und
- Fig. 2: die Übermittlung von Daten eines Fahrzeugs an einen externen Nutzer nach dem Schwarmdatenprinzip.

Fig. 1 zeigt die Übermittlung von Daten über das Umfeld eines Fahrzeugs an einen externen Backend-Rechner BE nach dem sogenannten Pull-Prinzip, wie dies derzeit gehandhabt wird. Dabei sind in der Fig.1 die hier relevanten Akteure als senkrechte Balken dargestellt, wobei die Zeit t von oben nach unten verläuft, wie dies der entsprechende Pfeil t symbolisiert. Dabei symbolisiert der erste Balken die Umwelt U, der zweite Balken die Sensorik S einschließlich der Positionsbestimmung eines Fahrzeugs F, der dritte Balken den Upload V der FAS-Daten und der vierte Balken den Backend-Rechner BE. Dabei sind die Sensorik S und der Upload V im Fahrzeug F angeordnet.

Der externe Backend-Rechner BE sendet im ersten Schritt eine Bedarfsanforderung 1 an FAS-Daten an des Upload V des Fahrzeugs F, wobei FAS-Daten für die von der Sensorik S der Fahrerassistenzsysteme erzeugten Umweltdaten einschließlich der GPS-Positionsdaten steht. Die von der Bedarfsanforderung 1 angeforderten FAS-Daten werden durch die kontinuierliche Beeinflussung 2 der Sensorik S des Fahrzeugs F durch die Umwelt U erzeugt und es erfolgt ein kontinuierliches Übersenden 3 der FAS-Daten an den Upload V, der die FAS-Daten in einem Ringspeicher 4 speichert und bereithält. Als Reaktion auf die Bedarfsanforderung 1 des Backend-Rechners BE erfolgt seitens des Uploads V zunächst die Übersendung 5 der GPS-Positionsdaten des Fahrzeugs aus dem Ringspeicher 4. Anhand der übermittelten GPS-Daten erfolgt beim Backend-Rechner BE eine Überprüfung 6, ob ein Bedarf an FAS-Daten bezüglich der durch die GPS-Daten gegebenen Position des Fahrzeugs F besteht. Fällt die Überprüfung 6 positiv aus, so erfolgt eine Bedarfsmeldung 7 an FAS-Daten an den Upload V, der die Übersendung 8 der angeforderten FAS-Daten aus dem Ringspeicher 6 an den Backend-Rechner BE veranlasst.

Allerdings hat der oben anhand der Fig. 1 geschilderte Ablauf drei wesentliche Nachteile:
- Hohes Anfragevolumen:
   Das Fahrzeug F meldet dem Backend-Rechner BE durch den Übersendungsvorgang 5 kontinuierlich seine Position. Wenn ein Bedarf jedoch nur in 1% der Fälle besteht, müssen dennoch 99% der Anfragen vergeblich ausgewertet werden. Dieses führt zu hohen Kosten auf der Seite des Backend-Rechners BE.
- Geringe Geschwindigkeit:
   Durch die Weiterleitung der FAS-Daten an den Backend-Rechner BE wird die Durchlaufzeit um die Analysezeit der jeweiligen Daten durch den Backend-Rechner BE erhöht. Dies bewirkt, dass die Daten im Fahrzeug F je nach Latenz länger gespeichert werden müssen, was zu höheren Einzelkosten im Fahrzeug F führt.
- Problemfeld Datenschutz:
   Werden an den Backend-Rechner BE direkt personenbezogene Daten wie beispielsweise GPS-Positionen weitergereicht, so müssen diese vor der Herausgabe anonymisiert werden, was zum Beispiel durch eine räumliche oder zeitliche Verschleierung der FAS-Daten erfolgen kann. Diese führt jedoch entweder zu einer deutlich höheren Latenz des Durchlaufs bei einer zeitlichen Verzögerung oder möglichen ungewollten Datenanforderungen bei ungewollten Anfragen durch verschleierte Positionen.

Besonders der dritte Punkt stellt die Entwicklung eines solchen Ablaufs nach dem Pull-Prinzip vor erhebliche Herausforderungen.

Fig. 2 zeigt die Integration einer Analyseeinrichtung AW in den Backend-Rechner BE, die durch geeignete Parameter gezielt gesteuert wird, wodurch die oben geschilderten Nachteile des Pull-Prinzips der Fig. 1 vermieden werden.

In einem Fahrzeug F sind in analoger Weise zu Fig. 1 eine Sensorik S angeordnet, die neben der Erfassung von Daten der in Fig. 2 nicht dargestellten Umwelt die Position des Fahrzeugs F mittels eines GPS-Systems (nicht dargestellt) erfasst, die in üblicher Weise als FAS-Daten bezeichnet werden, also die von der Sensorik der Fahrerassistenzsysteme ermittelten Daten. Die von den Fahrzeugsensoren der Sensorik S ermittelten FAS-Daten werden mittels einer Übertragung 10 einem Schwarmdatenaggregator SDA zugeführt und dort abgelegt, wobei der Schwarmdatenaggregator SDA neben der Speicherung der FAS-Daten eine Zusammenfassung der gespeicherten FAS-Daten erstellt. Ferner sind die im Schwarmdatenaggregator SDA gespeicherten FAS-Daten mit einer Zerfallszeit versehen, was bedeutet, dass die FAS-Daten nach Ablauf der Verfallszeit gelöscht werden. Üblicherweise ist daher der Schwarmdatenspeicher SDA als Ringspeicher ausgebildet.

Der Inhalt der Zusammenfassung kann dabei drei Gruppen von Informationen umfassen:
Eine erste Gruppe A betrifft die verfügbaren Informationen und beinhaltet folglich eine Übersicht über die im Fahrzeug verfügbaren Sensoren.

Eine weitere Gruppe B betrifft Information zum Wo und Wann. Mit anderen Worten, diese Gruppe betrifft beispielswiese grobe Positions- und Bewegungsdaten, Zeitstempel, Information zur aktuellen Straße, also ob es sich um eine innerörtliche Straße, eine Autobahn, eine Landstraße, etc. handelt.

Die dritte Gruppe C betrifft Informationen zur vermutlichen Qualität der Signale, also beispielsweise Zustandsdaten der eingesetzten Sensorik, mit anderen Worten keine erkannten Fehler, keine störenden Einflüsse, punktueller Abgleich von Sensoren, Messdaten zu möglichen störenden Umfeldeinflüssen, etc.

Generell kann je nach Nutzung als Zusammenfassung eine Auswahl der oben genannten Gruppen A, B und/oder C verschickt werden.

Der im Fahrzeug F angeordnete Schwarmdatenaggregator SDA bewirkt eine Übertragung 11 der Zusammenfassung der FAS-Daten an einen Schwarmspeicher SQ des externen Backend-Rechners BE. Es werden also in diesem Schritt nicht die kompletten Daten in den Backend-Rechner BE übertragen und innerhalb des Schwarmspeichers SQ abgelegt, sondern nur eine Zusammenfassung der im Schwarmdatenaggregator abgespeicherten FAS-Daten.

Die im Schwarmdatenspeicher SQ abgelegte Zusammenfassung der FAS-Daten wird einer im Backend-Rechner BE angeordneten Analyseeinrichtung AW, die auch als Analytic Worker bezeichnet wird, über eine Übertragung 12 zugeführt und in der Analyseeinrichtung AW mit einem geeigneten Algorithmus nach relevanten Daten analysiert. Der Analysealgorithmus wird hierbei von einem Nutzer N, der ein Bestandteil der Datenanalyse DA ist, die auch als Data Analytics bezeichnet wird, bereitgestellt und wird durch Parameter der Datenanalyse DA eingestellt, wobei die Parameter des Analysealgorithmus über eine Übertragung 13 der Analyseeinrichtung AW zugeführt werden. Dabei können die Parameter des Analysealgorithmus in einem festgelegten Zyklus, wie beispielsweise täglich oder wöchentlich, an die Analyseeinrichtung über die Übertragung 13 übertragen werden.

Erkennt die Analyseeinrichtung AW auf Basis ihres parametrierten Algorithmus relevante Daten innerhalb der Zusammenfassung des Schwarmspeichers SQ, so löst die Analyseeinrichtung AW ohne Zeitverzögerung ein sogenanntes "Data Pull" aus, mit anderen Worten, eine Anforderung 14 zur Übertragung 15 der FAS-Daten aus dem Schwarmdatenaggregator SDA des Fahrzeugs F in den Schwarmspeicher SQ des Backend-Rechners BE. Die nun im Schwarmdatenspeicher SQ des Backend-Rechners BE befindlichen vollständigen FAS-Daten werden dann einer Übermittlungs- und Anonymisierungseinrichtung DW über eine Zuführung 16 zugeführt, auch als "Dispatcher Worker" bezeichnet, in der sie mittels eines Anonymisierungsfilters verarbeitet und dem Nutzer N über eine Übertragung 17 zur Verfügung gestellt werden.

Im Folgenden wird die Parametrierung und der Analysealgorithmus der Analyseeinrichtung AW anhand eines einfachen Beispiels zur Entscheidung für Parkplatzdaten beschrieben, wobei die Analyseeinrichtung AW die Zusammenfassung der folgenden, stichwortartig beschriebenen Überprüfung unterwirft:
- Ist eine Parkplatzsensorik im Fahrzeug F verbaut?
- Überprüfen der GPS-Position des Fahrzeugs F, ob sich dieses im Umkreis einer vorgegebenen Großstadt, beispielsweise München, befindet?
- Liegt der Zeitpunkt ist zwischen 6:00 morgens bis 21:00 abends?
- Ist die Geschwindigkeit des Fahrzeugs kleiner 70 km/h? (70 km/h ist die Sensorgrenze für die Parksensoren, mit der Folge, dass Messungen größer 70km/h nicht nutzbar sind).
- Befindet sich Fahrzeug sind auf einer Straßenklasse, auf der Parkplätze wahrscheinlich sind?
- Funktionieren die Sensoren einwandfrei bzw. es werden keine Störungen erkannt?

Falls alle Fragen mit Ja beantwortet werden, fordert die Analyseeinrichtung die der Zusammenfassung entsprechenden FAS-Daten an.

Aus den obigen Fragen lassen sich auch die Parameter entnehmen, die den Analysealgorithmus der Analyseeinrichtung AW in diesem Beispiel beeinflussen. Es sind dies:
- Die GPS-Position im Umkreis einer Großstadt, z.B. München vorhanden. Es wird seitens des Nutzers N in dem Beispiel der Bereich München vorgegeben.
- Der Zeitbereich, der vom Nutzer N als die ihn interessierenden Zeiten vorgegeben wird.
- Eine Geschwindigkeitsgrenze wird als Parameter vorgegeben, beispielsweise soll die Geschwindigkeit des Fahrzeugs kleiner als 70 km/h sein.
- Es wird eine Straßenklasse definiert, auf der Parkplätze wahrscheinlich sind.
- Qualitätskriterien hinsichtlich der Sensoren werden vorgegeben; es wird also verlangt, dass die Funktion der Sensoren einwandfrei ist bzw. keine Störungen erkannt werden.

Der Anonymisierungsfilter des Übermittlungs- und Anonymisierungseinrichtung DW formt die personenbezogenen Daten in gruppenbezogene Daten um. Das kann entweder durch Verrauschung der Zeit erfolgen oder, wie beispielsweise bei Wetterdaten, durch die Verrauschung der Position des Fahrzeugs, also das Erzeugen einer ungenauen Position, bei der die Position beispielsweise mit einer Genauigkeit von +/- 500m ausgegeben wird, so dass viele mögliche Fahrzeuge diese Messung hätten durchführen können.

Wenn allerdings weder Zeit noch Raum und auch keine andere Möglichkeit der Verschleierung funktionieren, können die Daten nicht anonymisiert bereitgestellt werden. In dem Fall wird entweder eine spezielle Einwilligung des Fahrzeughalters benötigt oder auf die Anwendung verzichtet.

Das anhand der Fig. 2 erläuterte Verfahren bzw. Vorrichtung hat die folgenden Vorteile:
- Geringes Datentransfervolumen:
   Der Analyticsworker muss nur selten parametriert werden, und nur Daten, welche vom Nutzer benötigt werden, werden auch versendet.
- Schnelle Reaktionszeit:
   Die Auslösung der Datenübertragung der vollständigen FAS-Daten kann unmittelbar bei Bekanntwerden der Daten erfolgen. Eine mögliche Verzögerung durch eine Weitergabe der Daten oder mögilche Verschleiherungen ist nicht erfolderlich.
- Optimerter Datenschutz:
   Da die Daten, welche für die Datenanforderung erforderlich sind, das Backend BE nicht mehr verlassen, gelten die Datenschutzbestimmungen zwar für das Backend. Bestimmungen für eine mögliche Weitergabe der Daten gemäß dem Stand der Technik können jedoch vermieden werden.

### Bezugszeichenliste

- U: Umwelt
- S: Sensorik einschließlich Position
- V: Erfassen / Upload der FAS-Daten im Fahrzeug
- BE: Backend-Rechner
- F: Fahrzeug
- t: Zeit

- N: Nutzer
- SDA: Schwarmdatenaggregator
- SQ: Schwarm-Speicher
- AW: Analyseeinrichtung
- DW: Übermittlungs- und Anonymisierungseinrichtung
- DA: Datenanalyse

- 1: Bedarfsanforderung FAS-Daten (Daten Fahrerassistenzsysteme)
- 2: Beeinflussung der Fahrzeugsensorik durch die Umwelt (kontinuierlich)
- 3: kontinuierliches Übersenden der FAS-Daten an den Upload
- 4: Speichern der FAS-Daten in einem Ringspeicher
- 5: Zyklisches Übertragen der GPS-Positionsdaten an den Nutzer
- 6: Überprüfung der GPS-Positionsdaten auf Relevanz
- 7: Bedarfsmeldung an FAS-Daten
- 8: Übersendung der FAS-Daten aus dem Ringspeicher entsprechend dem Bedarf
- 10: Übertragung FAS-Daten
- 11: Übertragung der Zusammenfassungen der FAS-Daten
- 12: Übertragung der Zusammenfassungen an die Analyseeinrichtung
- 13: Festlegung der Analyseparam2018-0eter
- 14: Anforderung der FAS-Daten
- 15: Übermittlung der FAS-Daten an den Schwarmspeicher
- 16: Übermittlung der FAS-Daten an die Übermittlungs- und Anonymisierungseinrichtung
- 17: Übermittlung der anonymisierten FAS-Daten an den Nutzer in der Datenanalyse

## Patentansprüche

1. Verfahren zum Anfordern, Analysieren und Übermitteln von Daten der Fahrerassistenzsysteme eines Fahrzeugs (F), sogenannte FAS-Daten, an einen externen Nutzer (N) mit den Schritten:
- Ermitteln von FAS-Daten durch die Sensorik der Fahrerassistenzsysteme des Fahrzeugs (F),
- Speichern der FAS-Daten in einem fahrzeugseitigen Schwarmdatenaggregator (SDA), wobei die FAS-Daten im Schwarmdatenaggregator (SDA) mit einer Zerfallszeit versehen sind,
- Erstellen einer Zusammenfassung der im Schwarmdatenaggregator (SQ) gespeicherten FAS-Daten,
- Übermitteln der Zusammenfassung der FAS-Daten an einen Schwarm-Speicher (SQ) eines externen Backend-Rechners (BE),
- Analysieren der Zusammenfassung der FAS-Daten durch eine Analyseeinrichtung (AW) des Backend-Rechners (BE),
- Anfordern der im Schwarmdatenaggregator (SQ) gespeicherten FAS-Daten durch die Analyseeinrichtung (AW), falls die Analyse der Zusammenfassung ergibt, das relevante FAS-Daten im Schwarmdatenaggregator (SQ) vorliegen,
- Übertragen der FAS-Daten aus dem Schwarmdatenaggregator (SQ) des Fahrzeugs (F) an den Schwarm-Speicher (SQ) des Backend-Rechners (BE), und
- Übertragen der FAS-Daten aus dem Schwarm-Speicher (SQ) an den externen Nutzer (N).

2. Verfahren nach Anspruch 1, **dadurch gekennzeichnet, dass** die im Schwarm-Speicher (SQ) aufgrund der Anforderung gespeicherten FAS-Daten mittels einer Übermittlungs- und Anonymisierungseinrichtung (DW) anonymisiert und in anonymisierter Form an den externen Nutzer (N) weitergeleitet werden.

3. Verfahren nach einem der Ansprüche 1 oder 2, **dadurch gekennzeichnet, dass** die von der Übermittlungs- und Anonymisierungseinrichtung (DW) vorgenommene Anonymisierung der an den Nutzer (N) übertragenen FAS-Daten durch eine zeitliche und/oder räumliche Verrauschung erfolgt.

4. Verfahren nach Anspruch 3, **dadurch gekennzeichnet, dass** die zur Anonymisierung angewandte Art der Verrauschung ein Funktion der FAS-Daten ist.

5. Verfahren nach einem der vorangegangenen Ansprüche, **dadurch gekennzeichnet, dass** von der Analyseeinrichtung (AW) vorgenommen Analyse auf einem parametrierbaren Analysealgorithmus basiert.

6. Verfahren nach Anspruch 5, **dadurch gekennzeichnet, dass** die Parameter für den Analysealgorithmus vom Nutzer (N) bereitgestellt und an die Analyseeinrichtung (AW) übertragen werden.

7. Verfahren nach Anspruch 6, **dadurch gekennzeichnet, dass** die vom Nutzer (N) für den Analysealgorithmus bereitgestellten Parameter eine Funktion der vom Nutzer vorgesehenen Datenanalyse der FAS-Daten sind.

8. Verfahren nach einem der Ansprüche 5 bis 8, **dadurch gekennzeichnet, dass** die Parameter in einem vorgegebenen zeitlichen Zyklus vom Nutzer (N) an die Analyseeinrichtung (AW) übertragen werden.

9. Vorrichtung zum Anfordern, Analysieren und Übermitteln von Daten der Fahrerassistenzsysteme eines Fahrzeugs (F), sogenannte FAS-Daten, an einen externen Nutzer (N), wobei die Vorrichtung zur Durchführung des Verfahrens nach einem der vorangegangenen Ansprüche eingerichtet und ausgelegt ist, mit
- einer fahrzeugseitigen Sensorik (S) der Fahrerassistenzsysteme zur Generierung von FAS-Daten,
- einem fahrzeugseitigen Schwarmdatenaggregator (SDA) zur temporären Speicherung der erfassten FAS-Daten,
- einem externen Backend-Rechner (BE) mit einem Schwarm-Speicher (SQ) zur Speicherung der fahrzeugseitig erzeugten FAS-Daten, und
- einem Nutzer (N), der eine Datenanalyse (DA) ausgewählter FAS-Daten durchführt,
**gekennzeichnet, durch**
- eine im Backend-Rechner (BE) angeordnete Analyseeinrichtung (AW) mit einem Analysealgorithmus, wobei
- der Schwarmdatenaggregator (SDA) aus den temporär gespeicherten FAS-Daten eine Zusammenfassung erstellt,
- die Zusammenfassung des Schwarmdatenaggregators (SDA) an den Schwarm-Speicher (SQ) des externen Backend-Rechners (BE) übertragen wird und die Zusammenfassung von der Analyseeinrichtung (AW) anhand des Analysealgorithmus analysiert wird,
- die im Schwarmdatenaggregator (SQ) gespeicherten FAS-Daten durch die Analyseeinrichtung (AW) angefordert werden, falls die Analyse der Zusammenfassung ergibt, dass relevante FAS-Daten im Schwarmdatenaggregator (SQ) vorliegen,
- die FAS-Daten aus dem Schwarmdatenaggregator (SQ) des Fahrzeugs (F) an den Schwarm-Speicher (SQ) des Backend-Rechners (BE) aufgrund der Anforderung übertragen werden, und
- die FAS-Daten aus dem Schwarm-Speicher (SQ) an den externen Nutzer (N) übertragen werden.

10. Vorrichtung nach Anspruch 9, **gekennzeichnet durch** eine im Backend-Rechner (BE) angeordnete Übermittlungs- und Anonymisierungseinrichtung (DW), welche die auf Anforderung der Analyseeinrichtung (AW) in den Schwarm-Speicher (SQ) übertragenen FAS-Daten anonymisiert und die anonymisierten Daten an den Nutzer (N) überträgt.

11. Vorrichtung nach einem der Ansprüche 9 oder 10, **dadurch gekennzeichnet, dass** der fahrzeugseitige Schwarmdatenaggregator (SDA) durch einen Ringspeicher gebildet wird.

## Claims

1. A method for requesting, analyzing, and transmitting data from the driver assistance systems of a vehicle (F), what are known as FAS data, to an external user (N), comprising the steps of:
- determining FAS data via the sensor system of the driver assistance systems of the vehicle (F),
- storing the FAS data in a vehicle-side swarm data aggregator (SDA), wherein the FAS data in the swarm data aggregator (SDA) are provided with a destruction period,
- creating a summary of the FAS data stored in the swarm data aggregator (SQ),
- transmitting the summary of the FAS data to a swarm memory (SQ) of an external backend computer (BE),
- analysis of the summary of the FAS data by an analysis device (AW) of the backend computer (BE),
- requesting the FAS data stored in the swarm data aggregator (SQ), by the analysis device (AW), in the event that the analysis of the summary results that relevant FAS data are present in the swarm data aggregator (SQ),
- transmitting the FAS data from the swarm data aggregator (SQ) of the vehicle (F) to the swarm memory (SQ) of the backend computer (BE), and
- transmitting the FAS data from the swarm memory (SQ) to the external user (N).

2. The method according to Claim 1, **characterized in that** the FAS data stored in the swarm memory (SQ) due to the request are anonymized by means of a transmission and anonymization apparatus (DW) and forwarded to the external user (N) in anonymized form.

3. The method according to one of Claims 1 or 2, **characterized in that** the anonymization of the FAS data transmitted to the user (N), as performed by the transmission and anonymization apparatus (DW), takes place by means of the addition of temporal and/or spatial noise.

4. The method according to Claim 3, **characterized in that** the type of noise addition used for the anonymization is a function of the FAS data.

5. The method according to one of the preceding claims, **characterized in that** the analysis performed by the analysis device (AW) is based on a parameterizable analysis algorithm.

6. The method according to Claim 5, **characterized in that** the parameters for the analysis algorithm are provided by the user (N) and transmitted to the analysis device (AW).

7. The method according to Claim 6, **characterized in that** the parameters provided by the user (N) for the analysis algorithm are a function of the data analysis of the FAS data, said data analysis being provided by the user.

8. The method according to one of Claims 5 to 8, **characterized in that** the parameters are transmitted from the user (N) to the analysis device (AW) in a predetermined temporal cycle.

9. A device for requesting, analyzing, and transmitting data of the driver assistance systems of a vehicle (F), what are known as FAS data, to an external user (N), wherein the device is configured and designed to implement the method according to one of the preceding claims, having
- a vehicle-side sensor system (S) of the driver assistance systems for generating FAS data,
- a vehicle-side swarm data aggregator (SDA) for temporarily storing the detected FAS data,
- an external backend computer (BE) having a swarm memory (SQ) for storing the FAS data generated on the vehicle side, and
- a user (N) who implements a data analysis (DA) of selected FAS data,
**characterized by**
- an analysis device (AW), arranged in the backend computer (BE), with an analysis algorithm, wherein
- the swarm data aggregator (SDA) creates a summary from the temporarily stored FAS data,
- the summary of the swarm data aggregator (SDA) is transmitted to the swarm memory (SQ) of the external backend computer (BE), and the summary is analyzed by the analysis device (AW) using the analysis algorithm,
- the FAS data stored in the swarm data aggregator (SQ) are requested by the analysis device (AW) in the event that the analysis of the summary reveals that relevant FAS data are present in the swarm data aggregator (SQ),
- the FAS data are transmitted from the swarm data aggregator (SQ) of the vehicle (F) to the swarm memory (SQ) of the backend computer (BE) due to the request, and
- the FAS data are transmitted from the swarm memory (SQ) to the external user (N).

10. The device according to Claim 9, **characterized by** a transmission and anonymization apparatus (DW) arranged in the backend computer (BE), which apparatus anonymizes the FAS data transmitted to the swarm memory (SQ) at the request of the analysis device (AW) and transmits the anonymized data to the user (N).

11. The device according to one of Claims 9 or 10, **characterized in that** the vehicle-side swarm data aggregator (SDA) is formed by a circular buffer.

## Revendications

1. Procédé pour la demande, l'analyse et la transmission de données des systèmes d'aide à la conduite d'un véhicule (F), dites données ADAS, à un utilisateur (N) externe comprenant les étapes :
- de détermination de données ADAS au moyen des capteurs des systèmes d'aide à la conduite du véhicule (F),
- d'enregistrement des données ADAS dans un agrégateur de données d'essaim (SDA) côté véhicule, les données ADAS étant munies d'un temps de désagrégation dans l'agrégateur de données d'essaim (SDA),
- de génération d'une synthèse des données ADAS enregistrées dans l'agrégateur de données d'essaim (SQ),
- de transmission de la synthèse des données ADAS à une mémoire d'essaim (SQ) d'un ordinateur backend (BE) externe,
- d'analyse de la synthèse des données ADAS par un dispositif d'analyse (AW) de l'ordinateur backend (BE),
- de demande des données ADAS enregistrées dans l'agrégateur de données d'essaim (SQ) par le dispositif d'analyse (AW) si l'analyse de la synthèse démontre que des données ADAS pertinentes se trouvent dans l'agrégateur de données d'essaim (SQ),
- de transmission des données ADAS de l'agrégateur de données d'essaim (SQ) du véhicule (F) à la mémoire d'essaim (SQ) de l'ordinateur backend (BE), et
- de transmission des données ADAS à partir de la mémoire d'essaim (SQ) à l'utilisateur externe (N).

2. Procédé selon la revendication 1, **caractérisé en ce que** les données ADAS enregistrées dans la mémoire d'essaim (SQ) en raison de la demande sont anonymisées au moyen d'un dispositif de transmission et d'anonymisation (DW) et transmises sous forme anonymisée à l'utilisateur externe (N).

3. Procédé selon l'une quelconque des revendications 1 ou 2, **caractérisé en ce que** l'anonymisation effectuée par le dispositif de transmission et d'anonymisation (DW) des données ADAS transmises à l'utilisateur (N) est réalisée par un bruissement temporel et/ou spatial.

4. Procédé selon la revendication 3, **caractérisé en ce que** le type de bruissement utilisé pour l'anonymisation est une fonction des données ADAS.

5. Procédé selon l'une quelconque des revendications précédentes, **caractérisé en ce que** l'analyse réalisée par le dispositif d'analyse (AW) est basée sur un algorithme d'analyse paramétrable.

6. Procédé selon la revendication 5, **caractérisé en ce que** les paramètres pour l'algorithme d'analyse sont fournis par l'utilisateur (N) et transmis au dispositif d'analyse (AW).

7. Procédé selon la revendication 6, **caractérisé en ce que** les paramètres fournis par l'utilisateur (N) pour l'algorithme d'analyse sont une fonction de l'analyse de données des données ADAS prévue par l'utilisateur.

8. Procédé selon l'une quelconque des revendications 5 à 8, **caractérisé en ce que** les paramètres sont transmis par l'utilisateur (N) au dispositif d'analyse (AW) selon un cycle temporel prédéterminé.

9. Dispositif pour la demande, l'analyse et la transmission de données des systèmes d'aide à la conduite d'un véhicule (F), dites données ADAS, à un utilisateur externe (N), le dispositif étant conçu et configuré pour l'exécution du procédé selon l'une quelconque des revendications précédentes, comprenant
- des capteurs (S) côté véhicule des systèmes d'aide à la conduite pour la génération de données ADAS,
- un agrégateur de données d'essaim (SDA) côté véhicule pour l'enregistrement temporaire des données ADAS détectées,
- un ordinateur backend (BE) externe comprenant une mémoire d'essaim (SQ) pour l'enregistrement des données ADAS générées côté véhicule, et
- un utilisateur (N), qui effectue une analyse de données (DA) de données ADAS sélectionnées,
**caractérisé par**
- un dispositif d'analyse (AW) disposé dans l'ordinateur backend (BE), comprenant un algorithme d'analyse,
- l'agrégateur de données d'essaim (SDA) générant une synthèse à partir des données ADAS temporairement enregistrées,
- la synthèse de l'agrégateur de données d'essaim (SDA) étant transmise à la mémoire d'essaim (SQ) de l'ordinateur backend (BE) externe et la synthèse étant analysée par le dispositif d'analyse (AW) au moyen de l'algorithme d'analyse,
- les données ADAS enregistrées dans l'agrégateur de données d'essaim (SQ) étant demandées par le dispositif d'analyse (AW) si l'analyse de la synthèse démontre que des données ADAS pertinentes se trouvent dans l'agrégateur de données d'essaim (SQ),
- les données ADAS étant transmises à partir de l'agrégateur de données d'essaim (SQ) du véhicule (F) à la mémoire d'essaim (SQ) de l'ordinateur backend (BE) en raison de la demande, et
- les données ADAS étant transmises à partir de la mémoire d'essaim (SQ) à l'utilisateur externe (N).

10. Dispositif selon la revendication 9, **caractérisé par** un dispositif de transmission et d'anonymisation (DW) disposé dans l'ordinateur backend (BE), lequel anonymise les données ADAS transmises sur la demande du dispositif d'analyse (AW) dans la mémoire d'essaim (SQ) et transmet les données anonymisées à l'utilisateur (N).

11. Dispositif selon l'une quelconque des revendications 9 ou 10, **caractérisé en ce que** l'agrégateur de données d'essaim (SDA) côté véhicule est formé par une mémoire annulaire.
